(19) **Europäisches Patentamt**
**European Patent Office**
**Office européen des brevets**

(11) **EP 3 556 823 A1**

(12) **EUROPEAN PATENT APPLICATION**

(43) Date of publication:
**23.10.2019 Bulletin 2019/43**

(51) Int Cl.:
***C09K 8/68*** (2006.01)

(21) Application number: **18168141.2**

(22) Date of filing: **19.04.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (72) Inventor: **TINSLEY, Jack F**<br>**Houston, TX 77082 (US)**<br><br>(74) Representative: **BASF IP Association**<br>**BASF SE**<br>**G-FLP-C006**<br>**67056 Ludwigshafen (DE)** |
| (71) Applicant: **BASF SE**<br>**67056 Ludwigshafen am Rhein (DE)** | <u>Remarks:</u><br>Claims 16 to 35 are deemed to be abandoned due to non-payment of the claims fees (Rule 45(3) EPC). |

(54) **METHOD OF SLICKWATER FRACTURING**

(57) Method of slickwater fracturing in which a friction reducing composition is added to the fracturing fluid in order to reduce friction, wherein the aqueous fracturing fluid has a high salinity from 30,000 ppm to 350,000 ppm and the friction reducing composition comprises a water-in-oil-emulsion comprising acrylamide and anionic or cationic comonomers, a salt, a friction reducing booster and an inverting surfactant.

EP 3 556 823 A1

**Description**

The present invention relates to a method of slickwater fracturing in which a friction reducing composition is added to the fracturing fluid in order to reduce friction, wherein the aqueous fracturing fluid has a high salinity from 30,000 ppm to 350,000 ppm and the friction reducing composition comprises a water-in-oil-emulsion comprising acrylamide and anionic or cationic comonomers, a salt, a friction reducing booster and an inverting surfactant.

The productivity of oil or gas wells often is insufficient because the permeability of the subterranean formation from which oil and/or gas is produced is too low. It is known in the art to enhance the productivity of such oil and/or gas wells by hydraulic fracturing. In course of hydraulic fracturing, an aqueous fracturing fluid is injected into the well at a pressure sufficient to penetrate into the subterranean formation and to generate new fractures or fissures in the subterranean formation and/or to extend existing fractures of fissures thereby enhancing its permeability. In order to hold the fractures open also after removal of the pressure, the fracturing fluid usually comprises so-called proppants. Proppants are small hard particles, typically having dimensions in the range from 0.1 mm to 2.5 mm, such as for example, naturally-occurring sand grains, resin-coated sand, sintered bauxite, glass beads, ceramic particles, or polymer beads which are deposited in the fractures by the fracturing fluid and remain in the created fractures after the fluid is removed, thereby keeping the fractures open and allowing hydrocarbons to flow more easily from the formation to the production wellbore.

Because the density of proppants, such as sand particles usually is significantly higher than that of aqueous fluids, the suspension of the proppants in the fluid and the transport by the fluid requires particular attention. It is necessary to avoid that proppant settle in course of transport, for example in the wellbore or in pipe which transport the fracturing fluid.

Basically, two different techniques are known in the art for avoiding such settlement of proppants, namely either increasing the viscosity of the fluid using a suitable viscosifier, such as guar gum or flowing the fluid at very high speed. The latter method, also known as slickwater fracturing, is often preferred, but the high speeds employed create turbulent flow with excessive pumping pressure. These pressures are too high for the field equipment and the net effect is that the required flow rate is not achieved. For example, typical injection rates for slickwater hydraulic fracturing can reach about 15 $m^3$ per minute, but turbulence can restrict it to 1,5 $m^3$ per minute. To avoid this problem, it is known in the art to employ friction reducers. Examples of friction reducers comprise high molecular weight polymers, for example polyacrylamides that dampen the turbulent eddies, creating pressure drops approaching those of laminar flow. Because of the improved, low pressure flow imparted by the friction reducers, this method of fracturing has been termed slickwater fracturing.

Several friction reducers for slickwater fracturing and methods of reducing friction have been suggested in the prior art, for example in US 5,067,508, US 2003/0191030 A1, WO 204/028804 A1, or WO 2016/011106 A1.

WO 2016/109333 A1 discloses a method of friction reduction using an emulsion comprising water, a water-immiscible liquid, polymers, an emulsifying surfactant, an inverting surfactant, and one or more ethoxylated amine compounds. The emulsions are particularly suitable for use in harsh brine conditions.

CA 2 864 159 A1 discloses a formulation comprising an active emulsion polymer, preferably a friction-reducing polymer and an inversion facilitator additive which improves the friction reduction performance. The inversion facilitator additive may be selected from glycerol, urea, sorbitol, sucrose, glycerol phosphates, and choline chloride.

US 8,841,240 B2 discloses a method of slick water fracturing a subterranean formation, wherein the slick water fracturing composition comprises a partially hydrolyzed polyacrylamide polymer system within an inverted emulsion and a friction reduction booster system. The booster comprises quaternary salts and reduces friction by an additional amount.

US 9,315,722 B1 discloses a water-in-oil emulsion for friction reduction comprising 10 to 35 % by weight of a friction reducing polymer, at least 3 % by weight of a salt, and an inverting surfactant.

US 2015/0240144 A1 discloses a friction reducer composition comprising an ionic polyacrylamide and a silicon polyether. The composition preferably is an emulsion.

US 2017/0121590 A1 discloses a friction reducing composition comprising an inverse polymer emulsion and highly concentrated salt solution. The friction reducing composition may additionally comprise a viscosity modifier. In particular, the viscosity modifier may comprise an organic solvent selected from paraffin oil, kerosene, diesel, heavy naphtha, an animal derived fat, an animal derived oil, a vegetable-derived fat, a vegetable derived oil, limonene, pine oil, a surfactant or combinations thereof.

WO 2017/143136 A1 discloses a method of inverting a water-in-oil emulsion comprising contacting an aqueous liquid with water-in-oil emulsion comprising a polymer and a corn syrup, whereby the water-in-oil emulsion inverts and releases the polymer. The inverted water-in-oil emulsion may be used a friction reducer for aqueous liquids.

In slickwater fracturing, the quality of the injection water has become an increasingly important issue. Originally injection water used was from "freshwater" sources such as local lakes or wells that could be used for drinking water. However, due to the large quantities of water required, great stress was put on the local water supplies, and this became an issue for the environment and local communities. A recent trend has been to use produced water, which comes from the rock layers at the depths of the hydrocarbons, far below the water table. However, produced water is difficult to use because it contains contaminants like hydrocarbons, particles and high salinity. High salinity is a great challenge, with concentrations of total dissolved solids (TDS) typically ranging from 50,000 ppm to over 200,000 ppm. In addition, such water usually contains large amounts of hardness, i.e. multivalent ions like calcium, magnesium, strontium or iron.

Using produced water having high salinities severely reduces the performance of many friction reducers.

It was the object of the present invention to provide an efficient method of slickwater fracturing at high salinities and to provide suitable friction reducer formulations for use in slickwater fracturing.

Correspondingly, in a first embodiment the invention relates to a method of slickwater fracturing a subterranean, oil and/or gas bearing formation penetrated by at least a wellbore comprising at least the following steps

(1) Providing a friction reducing composition (I) comprising a copolymer comprising acrylamide,

(2) preparing an aqueous fracturing fluid by mixing at least an aqueous base fluid, the friction reducing composition (I) and proppants, and

(3) injecting the aqueous fracturing fluid into the at least a wellbore at a rate and pressure sufficient to penetrate into the formation, and to initiate or extend fractures in the formation and to transport proppants into thus generated fractures, and

(4) reducing the applied pressure thereby allowing at least a portion of the injected fracturing fluid to flow back from the formation into the wellbore, wherein at least a part of the proppants injected with the fracturing fluid remains in the initiated or extended fractures generated in course of step (3), thereby holding open such fractures, and

(5) removing such flowed back fracturing fluid from the wellbore,

wherein the aqueous base fluid has a salinity of 30,000 ppm to 350,000 ppm and the friction reducing composition (I) comprises at least

- a water-in-oil-emulsion (A) comprising in its aqueous phase a copolymer comprising 50 mol % to 95 mol % of acrylamide and 5 mol % to 50 mol % of at least one water-soluble, monoethylenically unsaturated, anionic or cationic comonomer, relating to the total of all monomers in the copolymer, wherein the weight average molecular weight $M_w$ of the copolymer is from 1,000,000 g/mol to 30,000,000 g/mol,

- a salt (B),

- a friction reducing booster (C), and

- an inverting surfactant (D),

wherein the amount of the copolymer in the friction reducing composition (I) is from 9 % by weight to 40 % by weight relating to the total of all components of the friction reducing composition (I), and

wherein the friction reducing composition (I) is added to the base fluid at a dosage of about 0.3 liters per thousand liters (0.3 gallons per thousand gallons, gpt) to about 5 liters per thousand (5 gpt).

The invention furthermore relates to a friction reducing composition (I) comprising at least

- a water-in-oil-emulsion (A) comprising in its aqueous phase a copolymer comprising 50 mol % to 95 mol % of acrylamide and 5 mol % to 50 mol % of at least one water-soluble, monoethylenically unsaturated, anionic or cationic comonomer, relating to the total of all monomers in the copolymer, wherein the weight average molecular weight $M_w$ of the copolymer is from 1,000,000 g/mol to 30,000,000 g/mol,

- a salt (B),

- a friction reducing booster (C), and

- an inverting surfactant (D),

wherein the amount in the copolymer in the friction reducing composition (I) is from 9 % by weight to 40 % by weight relating to the total of all components of the friction reducing composition (I).

In a second embodiment, the invention relates to a method of slickwater fracturing a subterranean, oil and/or gas bearing formation penetrated by at least a wellbore comprising at least the following steps

(1) Providing a friction reducing composition (II) comprising a copolymer comprising acrylamide,

(2) preparing an aqueous fracturing fluid by mixing at least an aqueous base fluid, the friction reducing composition (II) and proppants, and

(3) injecting the aqueous fracturing fluid into the at least a wellbore at a rate and pressure sufficient to penetrate into the formation, and to initiate or extend fractures in the formation and to transport proppants into thus generated fractures, and

(4) reducing the applied pressure thereby allowing at least a portion of the injected fracturing fluid to flow back from the formation into the wellbore, wherein at least a part of the proppants injected with the fracturing fluid remains in the initiated or extended fractures generated in course of step (3), thereby holding open such fractures, and

(5) removing such flowed back fracturing fluid from the wellbore,

wherein the aqueous base fluid has a salinity of 30,000 ppm to 350,000 ppm and the friction reducing composition (II) comprises at least

- a water-in-oil-emulsion (A) comprising in its aqueous phase a copolymer comprising 50 mol % to 95 mol % of acrylamide and 5 mol % to 50 mol % at least one water-soluble, monoethylenically unsaturated, anionic or cationic comonomer, relating to the total of all monomers in the copolymer, wherein the weight average molecular weight $M_w$ of the copolymer is from 1,000,000 g/mol to 30,000,000 g/mol,

- a salt (B),

- an inverting surfactant (D),

wherein the amount of the copolymer in the friction reducing composition (II) is from 9 % by weight to 40 % by weight, relating to the total of all components of the friction reducing composition (II), and
wherein the amount of the salt (B) is from 0.1 % by weight to 2.99 % by weight, relating to the total of all components of the friction reducing composition (II), and
wherein the friction reducing composition (II) is added to the base fluid at a dosage of about 0.3 liters per thousand liters (0.3 gallons per thousand gallons, gpt) to about 5 liters per thousand (5 gpt).

The invention furthermore relates to a friction reducing composition (II) comprising at least

- a water-in-oil-emulsion (A) comprising in its aqueous phase a copolymer comprising 50 mol % to 95 mol % of acrylamide and 5 mol % to 50 mol % at least one water-soluble, monoethylenically unsaturated, anionic or cationic comonomer, relating to the total of all monomers in the copolymer, wherein the weight average molecular weight $M_w$ of the copolymer is from 1,000,000 g/mol to 30,000,000 g/mol

- a salt (B),

- an inverting surfactant (D),

wherein the amount of the copolymer in the friction reducing composition (II) is from 9 % by weight to 40 % by weight, and the amount of the salt (B) is from 0.1 % by weight to 2.99 % by weight, relating to the total of all components of the friction reducing composition (II).

With regard to the invention, the following should be stated specifically:
In course of step (1) of the method of fracturing according to the present invention a friction reducing composition comprising a copolymer comprising acrylamide is provided and in course of step (2) an aqueous fracturing fluid is prepared by mixing at least an aqueous base fluid, a friction reducing composition and proppants. The present invention discloses two embodiments of friction reducing compositions, namely a friction reducing composition (I) and a friction reducing composition (II).

Friction reducing composition (I)

The friction reducing composition (I) comprises a water-in-oil-emulsion (A) comprising in its aqueous phase a water-soluble acrylamide copolymer. Polymer emulsions, comprising a water-soluble polymer dispersed in an organic phase are also known as inverse emulsions. Inverse polyacrylamide emulsions basically are known in the art and are commercially available. It furthermore comprises at least a salt (B), a friction reducing booster (C) and an inverting surfactant (D).

Water-in-oil-emulsion (A)

The acrylamide polymer in the inverse emulsion comprises at least acrylamide and at least one water-soluble, monoethylenically unsaturated, anionic or cationic comonomer.

Anionic comonomers comprise acidic groups or salts thereof, preferably groups selected from the group of -COOH, -SO$_3$H and -PO$_3$H$_2$ or salts thereof. Examples include acrylic acid, methacrylic acid, crotonic acid, itaconic acid, maleic acid or fumaric acid or salts thereof, vinylsulfonic acid, allylsulfonic acid, 2-acrylamido-2-methylpropanesulfonic acid (ATBS), 2-methacrylamido-2-methylpropanesulfonic acid, 2-acrylamidobutanesulfonic acid, 3-acrylamido-3-methylbutanesulfonic acid or 2-acrylamido-2,4,4-trimethylpentanesulfonic acid, vinylphosphonic acid, allylphosphonic acid, N-(meth)acrylamidoalkylphosphonic acids or (meth)acryloyloxyalkylphosphonic acids. Preferred anionic comonomers comprise acrylic acid and/or ATBS or salts thereof, most preferred is acrylic acid or salts thereof.

Examples of cationic monomers include monomers having ammonium groups, especially ammonium derivatives of N-(ω-aminoalkyl)(meth)acrylamides or ω-aminoalkyl (meth)acrylates such as 2-trimethylammonioethyl acrylate chloride H$_2$C=CH-CO-CH$_2$CH$_2$N$^+$(CH$_3$)$_3$Cl$^-$ (DMA3Q).

Preferably, the water-soluble, monoethylenically unsaturated comonomers are selected from the group of acrylic acid or salts thereof, ATBS or salts thereof, or DMA3Q.

Besides acrylamide and water-soluble, monoethylenically unsaturated, anionic or cationic comonomer of course also further monoethylenically unsaturated monomers may be present.

In one embodiment, the acrylamide copolymer comprises 50 mol % to 95 mol % of acrylamide and 5 mol % to 50 mol % of further comonomers, relating to the total of all monomers in the copolymer. Preferably, the amount of acrylamide and water-soluble, monoethylenically unsaturated anionic or cationic monomers sums up to 100%, i.e. no further monomers are present. In another embodiment, the acrylamide copolymer comprises 50 mol % to 90 mol % of acrylamide and 10 mol % to 50 mol % of further comonomers, more preferably 60 mol % to 90 mol % of acrylamide and 10 mol % to 40 mol % of further comonomers.

In one preferred embodiment, the acrylamide copolymer comprises 50 mol % to 95 mol % of acrylamide and 5 mol % to 50 mol % of acrylic acid or salts thereof, relating to the total of all monomers in the copolymer. Preferably, the amount of acrylamide and acrylic acid or salts thereof sums up to 100%, i.e. no further monomers are present. In another embodiment, the acrylamide copolymer comprises 50 mol % to 90 mol % of acrylamide and 10 mol % to 50 mol % of acrylic acid or salts thereof, more preferably 60 mol % to 90 mol % of acrylamide and 10 mol % to 40 mol % of acrylic acid or salts thereof.

The intrinsic viscosity of the acrylamide copolymer should preferably be at least 17 deciliter/gram (dL/g), in particular 19 dL/g to 28 dL/g.

The oil phase in the water-in-oil-emulsion (A) basically may be any kind of mineral oil. In one embodiment of the invention aliphatic mineral oils with a content of aromatic hydrocarbons of less than 5 % by wt., preferably less than 1 % by wt. may be used. A high content of iso-alkans is beneficial. Preferably, the flash point should be at least 100°C.

The water-in-oil emulsion (A) typically comprises from about 25 % by weight to 36 % by weight of polymers, from about 18 % by weight to 28 % by weight of the oil phase, and from about 36 % by weight to 57 % by weight of water, relating to the total of all components of the oil-in-water emulsion (A).

The amount of the acrylamide copolymer in the friction reducing composition (I) may be from 9 % by weight to 40 % by weight relating to the total of all components of the friction reducing composition (I), preferably from 12 to 27 % by weight. The amount of the water-in-oil-emulsion (A) used for making the friction reducing composition (I) is chosen accordingly.

Salts (B)

The friction reducing composition (I) according to the present invention comprises additionally a salt.

In one embodiment of the invention, the salt comprises ions selected from the group of ammonium, potassium, sodium, fluoride, sulfate, acetate, chloride, or biphosphate, or any combinations thereof. Preferred cations are monovalent ions such as ammonium, potassium and sodium. Preferred anions are fluoride, sulfate, acetate, chloride and biphosphate.

Examples of salts comprise alkali metal halogenides such as LiCl, NaCl, KCl, or other alkali metal salts such as NaH$_2$PO$_4$, NH$_4$Cl, Na$_2$SO$_4$, K$_2$SO$_4$, or (NH$_4$)$_2$SO$_4$. Preferably, the salt may be NaCl. Of course also a mixture of 2 or more different salts may be used. Examples of such mixtures comprise mixtures of NaCl and NH$_4$Cl, NaCl and Na$_2$SO$_4$, NaCl and K$_2$SO$_4$, NaCl and (NH$_4$)$_2$SO$_4$, KCl and NaCl, KCl and NH$_4$Cl, KCl and Na$_2$SO$_4$, KCl and K$_2$SO$_4$, or KCl and (NH$_4$)$_2$SO$_4$.

The amount of all salts in the friction reducing composition (I) may be from % 0.1 by weight to 10% by weight, preferably from 0.1 % by weight to 8 % by weight, more preferably from 0.1 % by weight to 2.99 % by weight and for example from 2.5 % to 7 % by weight relating to the total weight of the friction reducing composition (I).

Friction reducing booster (C)

The friction reducing composition (I) furthermore comprises at least one friction reducing booster (C). Of course, mixtures of two or more different boosters (C) may be used. The friction reducing boosters (C) increase the friction reduction performance of the friction reduction composition in saline environment although they are not friction reducers by themselves.

Examples of friction reducing boosters (C) comprise mono-, di-, and oligosaccharides such as dextrose, corn syrup, sorbitol, Malic acid, lactic acid, glycerol, glyoxal, glutaraldehyde, butyl diglycol, butyl triglycol, butyl monoglycol, polyethyleneglycole, polypropyleneglykole, polypropyleneglykole monoethers, such as polypropyleneglykole monobutylether, dimethylaminopropyl amine, polyamines, cationic polymers such as cationic polyacrylamides, alkylpolyglucosides, polyvinalyalcohol, choline chloride, formic acides, their salts and/or derivatives thereof, such a potassium formate, or ionic liquids such as 1-ethyl-3-methylimidazolium chloride, 1-butyl-3-methylimidazolium chloride, methyltributylammonium methylsulfate or 1-butyl-3-methylimidazolium methanesulfonate.

In one embodiment of the present invention, the friction reducing boosters (C) are selected from the group of mono-, di-, and oligosaccharides and polyvinylalcohols.

Examples of mono-, di-, and oligosaccharides comprise glucose, fructose, or maltose. Oligosaccharides comprise up to ten saccharide units. Of course, mixtures of two or more different mono-, di-, and oligosaccharides may be used.

In one embodiment of the invention, corn syrup may be used as friction reducing booster. Corn syrup is a sugar concentrate obtainable by enzymatic depolymerization of corn starch. It comprises glucose and/or fructose are the main components besides minor amounts of disaccharides such as maltose or higher saccharides. Consumer grade versions of corn syrup, such as Karo Light Corn Syrup are effective.

The term "polyvinylalcohol" in usual manner means polymers obtainable from polymerization of vinylesters, in particular vinylacetate, followed by partial or full hydrolysis of the ester groups. Polyvinylalcohols are commercially available with different polymerization degrees and different degrees of hydrolysis. Basically, any kind of polyvinylalcohol may be used within the scope of the present invention. The degree of hydrolysis may be from 85 % to 100% and the number average molecular weight may be from 5,000 g/mol to 40,000 g/mol.

In one embodiment of the invention, polyvinylacohols having a degree of hydrolysis of more than 95% and a number average molecular weight $M_n$ of not more than 25,000 g/mol, for example from 5,000 to 25,000 g/mol may be used. In another embodiment of the invention, polyvinylacohols having a degree of hydrolysis of 85 to 95% and a number average molecular weight $M_n$ of 25,000 to 40,000, may be used.

In one embodiment of the invention, the friction reducing booster (C) is selected from the group of glucose, fructose, corn syrup, and polyvinylalcohols. The most preferred embodiments are with dextrose or corn syrup.

The amount of all friction reducing boosters (C) in the friction reducing composition (I) may be selected by the skilled artisan according to his/her needs.

Depending on the chemical nature of the friction reducer boosters (C), the amount may be from 0.005 % by wt. to 8 % by weight, relating to the total of all composition of the friction reducing composition (I).

If the friction reducing booster (C) has a molecular weight $M_n$ of less than 3000 g/mol - for example dextrose or corn syrup- its amount preferably may be from 1.5 % by weight to 8 % by weight, preferably from 3 % by weight to 7 % by weight relating to total composition of the friction reducing composition (I).

If the friction reducing booster (C) is a polymeric booster having a number average molecular weight $M_n$ of at least 3000 g/mol -for example polyvinylalcohol- its amount may be from 0.005 to 0.5 % by weight, preferably from 0.01 to 0.025% by weight relating to total composition of the friction reducing composition (I).

Activating surfactant (D)

The friction reducing composition (I) according to the present invention furthermore comprises at least one activating surfactant (B). It is the aim of adding such an additive to accelerate the inversion of a copolymer solution after mixing the friction reducing composition (I) with the aqueous base fluid. Using activating surfactants basically is known in the art.

Basically, any kind of inversion facilitator additive may be used.

Examples of suitable activating surfactants (D) comprise nonionic surfactants, in particular polyalkoxylated alcohols, in particular polyalkoxylates $C_8$ to $C_{22}$ alkohols. The polyalkoxy groups preferably may be selected from ethoxy, propopxy or butoxy groups. In a preferred embodiment, the polyalkoxy groups comprise at least ethoxy groups and optionally propoxy and/or butoxy groups. Specific examples include surfactants based on oxo alcohols, in particular based on $C_{13/15}$ oxo alcohols and comprising 5 to 15 EO units and optionally PO and/or BuO with the proviso that the number of PO and/or BuO units is less than the number of EO units.

The amount of all activating surfactants (D) in the friction reducing composition (I) is from 1 % to 5 % by weight preferably from 2 % to 4 % by weight relating to total weight of the final inverse emulsion.

Friction reducing composition (II)

In a second embodiment of the invention, a friction reducing composition (II) is used which comprises at least a water-in-oil-emulsion (A), a salt (B) at a concentration of 0.1 to 2.99 % by weight, relating to the total of all components of the friction reducing composition (II), and an inverting surfactant (D). It may optionally comprise a friction reducing booster (C).

When adding the salt (B) alone without booster (C), it has been surprisingly found that also salts alone improve the performance significantly, however, only up to a limit of 2.99 % by weight. Adding more salts diminishes the performance.

Suitable salts (B) and preferred salts have already been described above and we refer to the disclosure above.

The amount of all salts in the friction reducing composition (II) is from 0.1 % by weight to 2.99% by weight, preferably from 0.5 % by weight to 2.95 % by weight, more preferably from 1 % to 2.9 % by weight relating to the total friction reducing composition (II).

The components (A), (D), and optionally (C) and their amounts have already been described above and we refer to the description above.

Manufacture of the friction reducing compositions

The friction reducing compositions (I) or (II) may be manufactured by mixing the components, for example by stirring.

It is advisable to provide the water-in-oil-emulsion (A) and then to add the other components. For example, a solution with salt (B) or a solution with salt and booster (B)+(C) may be added to the water-in-oil-emulsion (A), and finally, the activating surfactant (D) is added to the mixture, thereby obtaining the final friction reducing compositions (I) or (II).

In one embodiment of the invention, the water-in-oil-emulsion (A) may be mixed with additional oil and an emulsifier as a first step and thereafter further components added as described in the preceding paragraph. Additional oil to be added preferably is the same oil as that used in the water-in-oil-emulsion (A).

Method of slickwater fracturing

For applying the method of slickwater fracturing according to the present invention to the formation, the formation is penetrated by at least one wellbore. The wellbore may be a "fresh" wellbore drilled into the formation which needs to become prepared for oil and/or gas production. In another embodiment the wellbore may be a production well which already has been used for producing oil and/or gas but the production rate decreased and it is necessary to fracture the formation (again) in order to increase production.

The method of slickwater fracturing according to the present invention comprises at least five steps (1), (2), (3), (4), and (5).

Step (1)

In course of step (1), either a friction reducing composition (I) or a friction reducing composition (II) is provided. Details have already been disclosed above.

The friction reducing compositions (I) or (II) may be prepared at the location it is used for slickwater fracturing, i.e. on an oilfield close to the wellbore it is injected in.

In other embodiments, the friction reducing composition (I) or (II) may be prepared at a location apart from the wellbore. i.e. in a fixed chemical plant or a mobile chemical plant and transported from such location of manufacture to the location of use. For transport, the friction reducing compositions (I) or (II) may be filled into suitable tanks, for instance tank containers which may be transported by trucks or railcars or into road tankers. Also, pipelines may be used for transport. In the latter embodiment, step (1) is performed at another location than steps (2), (3), (4), and (5), and step (1) is followed by a transporting step (1a).

Step (2)

In course of step (2) an aqueous fracturing fluid is prepared by mixing at least an aqueous base fluid, a friction reducing composition (I) or friction reducing composition (II) as and proppants.

The aqueous base fluid has a salinity of 30,000 ppm to 350,000 ppm.

Examples of aqueous base fluids comprise sea water, formation water treated water or mixtures of such fluids with fresh water.

The salts may especially be alkali metal salts and alkaline earth metal salts. Examples of typical cations comprise $Na^+$, $K^+$, $Mg^{2+}$ or $Ca^{2+}$, and examples of typical anions comprise chloride, bromide, hydrogencarbonate, sulfate or borate. Furthermore, alkaline earth metal ions may be present and the weight ratio of alkali metal ions/alkaline earth metal ions is generally $\geq 2$, preferably $\geq 3$. The anions present are generally at least one or more than one halide ion, especially at least $Cl^-$.

In other embodiments of the invention, the salinity may 50,000 ppm TDS and above, preferably 90,000 ppm TDS and above.

Proppants are small hard particles which cause that fractures formed in course of the process do not close after removing the pressure. Suitable proppants and suitable amounts thereof are known to the skilled artisan. Examples of proppants include naturally-occurring sand grains, resin-coated sand, sintered bauxite, glass beads, or ultra-lightweight polymer beads.

Besides the aqueous base fluid, the friction reducing composition (I) or (II) and the proppants optionally further components may be present in the aqueous fracturing fluid. Examples of such additional components comprise biocides, corrosion inhibitors, scale inhibitors, iron control agents and clay control agents. The skilled artisan may select such further depending on the needs of the frac job.

In slickwater fracturing the aqueous fracturing fluid often comprises no thickening components are used. So, besides the friction reducing polymer which may have a slight viscosifying effect, no further thickening components such as thickening surfactants or thickening polymers may be used, although the use of such thickening components may not absolutely be ruled out. For example, uncrosslinked guar polymer may be used (so-called linear gels) with are often used with a typical viscosity of 20-50 cp.

The aqueous base fluid, the friction reducing composition (I) or (II), the proppants and optionally further components are typically mixed in large blending equipment, often on a mobile truck brought to the oilfield. A typical vessel has 800 to 1600 liter (5 -10 barrel) volume, a large stirrer and is capable of 16000 liters/minute (-100 bbl/minute) flow rate.

Step (3)

In course of process step (3) the aqueous fracturing fluid pumped into a wellbore at a rate and pressure sufficient to flow into the formation and to initiate or extend a fracture in the formation. In order to initiate or to extend fractures in the formation a bottomhole pressure sufficient to open a fracture in the formation is necessary.

Depending on the depth of the well, the fracturing fluid typically is injected at such a rate that is typically takes about 3 to 7 min to flow through the pipe into the subterranean formation.

The bottomhole pressure is determined by the surface pressure produced by the surface pumping equipment and the hydrostatic pressure of the fluid column in the wellbore, less any pressure loss caused by friction. The minimum bottomhole pressure required to initiate and/or to extend fractures is determined by formation properties and therefore will vary from application to application. Methods and equipment for slickwater fracturing procedures are known to the skilled artisan. The fluid simultaneously transports suspended proppants and the proppant becomes deposited into the fractures and holds fractures open after the pressure exerted on the fracturing fluid has been released.

Step (4)

In course of process step (4) the applied pressure is reduced thereby allowing at least a portion of the injected fracturing fluid to flow back from the formation into the wellbore. Reducing the pressure allows the fractures to close. At least a part of the proppants injected with the fracturing fluid remains in the initiated or extended fractures generated in course of step (3), thereby holding opens such fractures.

Step (5)

In course of step (5) the aqueous fracturing fluid flown back from the formation into the wellbore is removed from the wellbore. It goes without saying for the skilled artisan that the aqueous fracturing fluid recovered may no longer have exactly the same composition as he injected fluid but may be mixed with formation fluids such as oil and/or formation water. Furthermore, at least a portion of the proppants remains in the formation.

Advantages of the present invention

The present invention provides a method of slickwater fracturing in which aqueous fracturing fluids comprising having a high salinity are used. The aqueous base fluid to be used in the present invention has a salinity 30,000 ppm to 350,000 ppm. So, for carrying out the present invention it is not necessary to use fresh water, but sea water and/or formation water may be used. This is important, because often fresh water is not available on oilfields or it is at least expensive to transport fresh water to the oilfield. Common friction reducers based on water-in-oil-emulsions of polyacrylamides often loose performance when used in brines instead of fresh water. The friction reduction composition (I) and the friction reducing composition (II) described above show a satisfactory friction reduction performance also in brines.

The examples which follow are intended to illustrate the invention in detail:
In slickwater, a fracturing fluid needs to have friction reduction as soon as it starts going downhole and needs to maintain its effect as long the fluid is in the pipe, around five minutes depending on the depth of the well. Therefore, when evaluating friction reducers in a laboratory friction loop as the one used here, it is desired that the acceptable level of friction reduction (typically at least 60 to 70%) is reached within 15 to 30 seconds of injection and is maintained several minutes, the longer the better.

Materials used:

Water-in-oil emulsion

The original water-in-oil emulsion was synthesized as follows.

A monomer phase was prepared in a glass beaker by combining an acrylamide solution (323.53 g, 50% in water), acrylic acid solution (29.16g, 99.5% in water) together with Trilon® C solution (0.53 g, 50% in water), isopropyl alcohol (0.16g), potassium bromate solution (3.60 g, 5% in water) and DI water (156.19 g). The pH was adjusted to a range of 6.4 - 6.8 using sodium hydroxide (30.59 g, 50% in water). The monomer phase was then mixed on a stir plate for 10 minutes.

In a stainless-steel container, the oil phase was prepared by combining a mineral oil (commercially available isoalkane mixture having less than 0.5 % by weight of aromatics, flash point 102°C (Conosol® C200) (193.20 g) and sorbitan monooleate(10.91 g). The oil phase was then mixed on a stir plate for 10 minutes. Once the oil phase was fully mixed the monomer phase was added to the stainless-steel container, and the contents were mixed for 15 minutes on a stir plate.

The monomer and oil phase mixture was emulsified by the by a conventional high-shear mixer for the laboratory for 15 seconds. Then the emulsion was transferred into a glass reactor equipped with an agitator, a nitrogen sparger, a reflux condenser and a thermometer. Under stirring at 500 rpm, the emulsion was purged with nitrogen for 30 minutes as the reactor was cooled to 15°C.

After the reactor was degassed, the polymerization was initiated by introducing the sodium bisulfite (10.00 g, 0.3% in water) feed into the reactor with a peristaltic pump. Thereby, the temperature increased from 15 to 40 °C with approx. 0.5°C/min. The temperature was kept constant at 40°C by increasing the sodium bisulfite feed as needed. After the polymerization failed to maintain 40°C, a sodium bisulfite (0.50g, 38% in water) reshoot was added to the reactor. The emulsion was then cooled to 20°C.

Inversion facilitator additives (B)

| Activator 1 | Nonionic surfactant on basis of a branched oxo alcohol, $iC_{13/15}$-ethoxylate-propoxylate, HLB ~ 8 |
| Activator 2 | Nonionic surfactant on basis of a branched oxo alcohol, $iC_{13/15}$-ethoxylate-butoxylate, HLB ~ 11 |

Friction reducing booster (C)

| Karo syrup | Commercially available corn syrup (Karo light corn sirup) |
| Dextrose | Solid glucose |
| Polyvinylalcohol | Commercially available polyvinylalcohol having a degree of hydrolysis from 98 - 98.8 % and a number average molecular weight $M_n$ in the range from 7,000 - 15,000 g/mol |

Brines

The brine used for the test was a solution of 8.5 % by weight of NaCl and 2.5 % by weight of $CaCl_2$ x 2 $H_2O$ in fresh water, wherein the percentages relate to the total of all components of the brine.

Hydrocarbon mixture:

Mixture of $C_{12}$ - $C_{16}$ cycloparaffins and isoparaffins, flash point > 200°C

Preparation of Solutions with Salt and Boosters

For a given friction reducing composition, a single solution was prepared containing salt and booster by combining components in de-ionized water and stirring until dissolved.

In the case of polyvinylalcohols, the solutions were heated to 80°C for 20 minutes to dissolve the polymers. The concentration of salt and booster in this solution was chosen to achieve a specific concentration when combined with all other components. In some cases, only salt was used with no booster.

Preparation of friction reducing composition

81 grams of a water-in-oil emulsion as described above was added to a 400 ml beaker equipped with an overhead stirrer. Then 12 grams of the hydrocarbon mixture (H) and 0.525 grams of sorbitan monooleate were added and left to stir for 30 minutes. Thereafter 57 grams of the respective aqueous booster solution as describes above was added and let stir for 60 minutes. Finally, either at that time or later, an inversion facilitator additive was added while mixing.

Friction Loop Test

The performance of the friction reducing compositions in friction reduction was assessed using a Chandler model CP 204 friction loop. Fluid in the loop flows from a -37.8 l (~ 10 gallon) reservoir through a pump, mass flow meter and then two ~ 250 cm (10 feet) long sections of pipe before returning to the reservoir to be recirculated. Pressure drop is measured over the two sections of pipe. One is 1.27 cm outer diameter (1/2 inch), the other is 1.91 cm outer diameter (3/4" inch), giving different ranges of Reynolds number.

The friction loop was loaded with 37.85 l (10 gallons) of aqueous test fluid (fresh water or brines). The flow rate was set to 37.85 l per minute (10 gallons per minute) and once a stable, initial pressure was recorded. Thereafter, the friction reducing composition to be tested was injected into the vortex of the fluid reservoir using a plastic syringe.

The injection time was taken as the start of the test (time = 0 seconds). The subsequent drop in pressure measured the performance of the friction reducing composition. The pressure data from the 1.27 cm pipe is reported, because it reflected a higher Reynolds number than the 1.91 cm pipe.

Pressure data was converted to friction reduction using the formula:

$$\% \ Friction \ Reduction \ (\% \ FR) = \frac{Initial \ Pressure \ with \ no \ FR - Pressure \ with \ FR}{Initial \ Pressure \ with \ no \ FR}$$

The following tests were performed:

Test series 1:

A friction reducing composition was prepared as described above using the water-in-oil-emulsion (A) and an activator (D) at a concentration of 3 % by wt., however no friction reducing boosters nor salts were used. The amount of actives was 24.7 by wt. %.

In comparative example E1, the friction reducing composition was tested in fresh water with the friction loop test as described above. In comparative example E2, the friction reduction composition was tested in API brine. In each test, the friction reduction composition was added at a concentration of 0.5 liters per thousand liters (0.5 gallons per thousand gallons, gpt), which in this case was 18.9 mL added to 37.8 L of fresh water or API brine. The final polymer concentration in the loop test was 0.12 g/l.

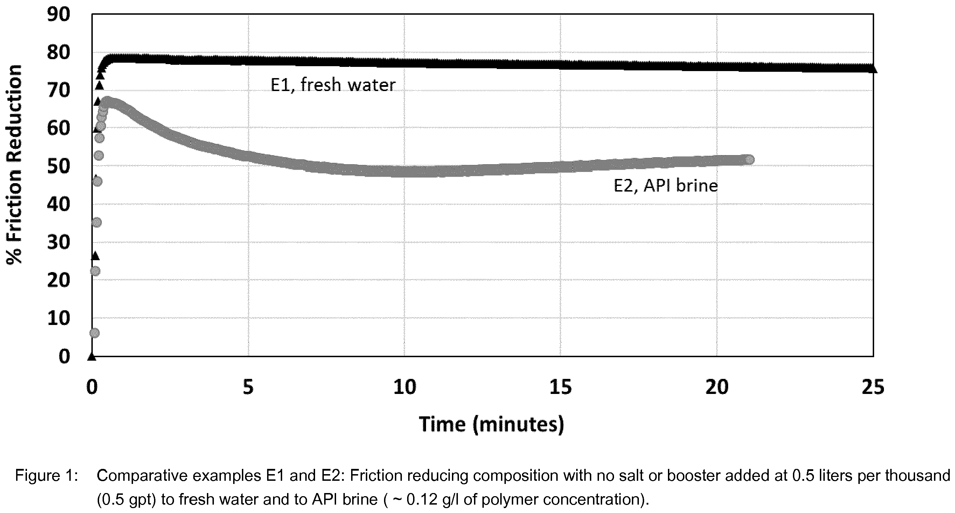

The results are shown in figure 1.

In fresh water, the performance of the friction reduction composition is satisfying. After the initial period the friction reduction is about 77 %. In API brine however, the friction reduction is significantly lower. Also, in the initial period it is below 70 % and after 5 min it is only around 50 %.

Test series 2:

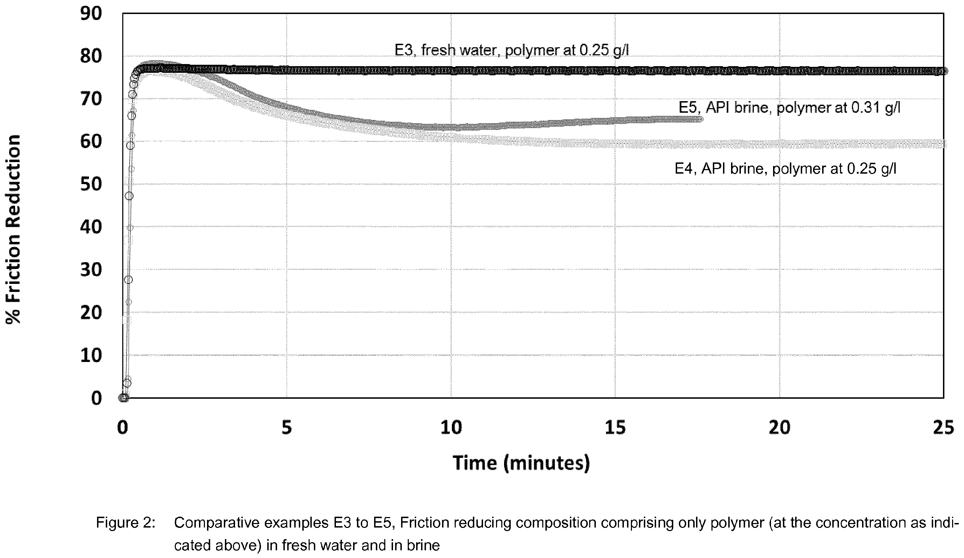

The comparative examples E3 to E5 were also without booster, however, the polymer concentrations were increased. Tests were performed by adding 1.0 liter per thousand (1.0 gpt) in fresh water and in API brine, and another test was performed by adding 1.25 liter per thousand (1.25 gpt) in API brine. The active polymer content was 25 % by weight and the polymer concentrations in the flow loop at the above specified dosages were 0.25 g/l and 0.31 g/l, respectively). The results are shown in figure 2.

In fresh water (comparative example E3, 0.25 g/l), the friction reduction is about 77 %. In API brine (comparative example E4, 0.25 g/l) initially also approaches in about 77 % but drops to less than 70 % within 5 min and further drops to 60 % after 10 min. Increasing the polymer concentration another time (comparative example E5, 0.312 g/l) finally yields a friction reduction in API brine of about 65 %. The samples are label E3, E4 and E5 in figure 2 corresponding to its comparative example.

To summarize, an increasing polymer concentration improves the results in brine, however, the results are still clearly worse than the results obtained in fresh water.

Test series 3:

In test series 3, the effect of adding NaCl to the friction reduction composition as described above (i.e. comprising the water-in-oil emulsion (A) and an activator (D)) was studied. No booster was used in course of test series 3. All tests were performed in API brine.

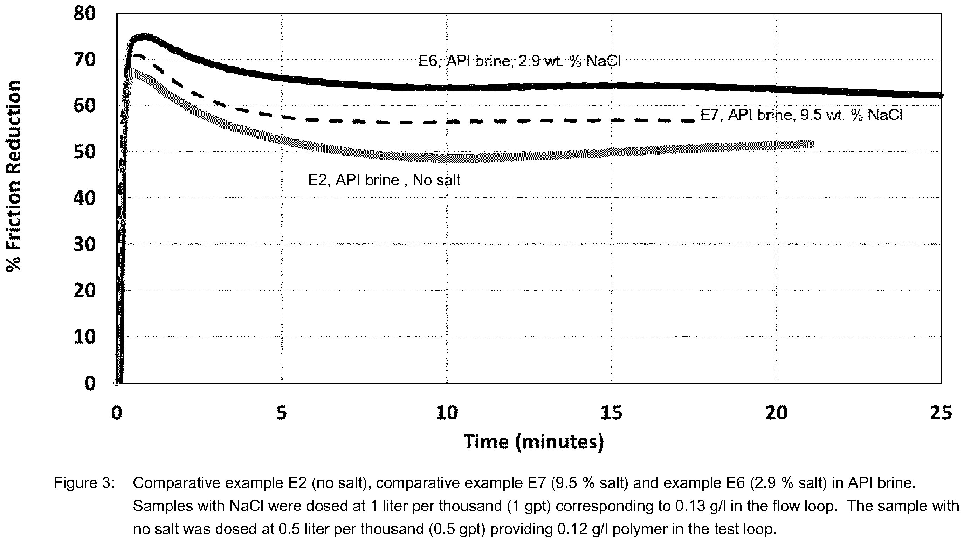

Two friction reduction compositions comprising NaCl were tested, one with 2.9% NaCl (example E6) and the other one with 9.5% NaCl (comparative example 7 or E7). Both had 13.4% active polymer content were added at 1 liter per thousand (1.0 gpt) giving a polymer concentration of 0.13 g/l in the friction loop. For comparison, a sample comprising no NaCl was tested (comparative example 2, E2), added at 0.5 liter per thousand (0.5 gpt) with 25 % by weight active polymer content (0.12 g/l polymer concentration in the flow loop). The results are shown in figure 3.

The results demonstrate that limited amounts of NaCl indeed can improve the friction reduction performance also in API brine. The friction reduction composition comprising 2.9 wt. % NaCl (E6) has a better performance in API brine than the composition without salt in API brine (E2). The 9.5 wt. % sample (E7) performs better than the sample without salt, but already performs worse than the 2.9 wt. % sample. The examples demonstrate that adding less than 3 % of a salt already improves the performance.

Test series 4:

For comparative example E8, the performance of a friction reducing composition comprising the water-in-oil emulsion (A) and an activator (D) and additionally a booster (C) was assessed.

This friction reduction composition was prepared slightly differently from the others. The original water-in-oil emulsion (A) was stirred and Karo light corn syrup (the booster (C)) was added, followed by an activator (D). The resulting friction reducing composition contained 23.5 % polymer, 5 % Karo and 3 % activator, all by weight. Said friction reducing composition was tested in API brine at 1 liter per thousand (1 gpt).

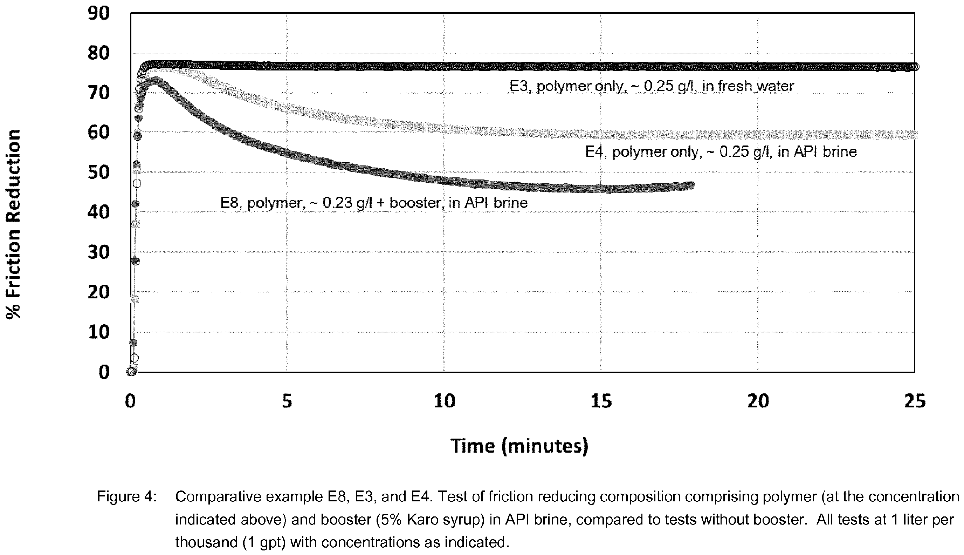

The results are shown in figure 4. For comparison, figure 4 also depicts again comparative examples E3 and E4 (i.e. tests with water-in-oil emulsion (A) and an activator (D), however no booster). Figure 4 shows that in the test in API brine adding the booster (C) (Karo syrup) to the polymer even yields a result worse than that without booster.

Test series 5:

In examples E9 and E10 a friction reducing composition comprising the water-in-oil-emulsion (A), 3.8 % by weight dextrose, a friction reducing booster (C), and 2.9 % by weight of NaCl, a salt (B) was tested. Activator (D) was added at 3 % by weight. The amount of actives was 13.4 % by wt. %.

In example E9, 1 liter per thousand (1 gpt =37.8 ml) of the formulation was added to API brine resulting in a polymer concentration of ∼ 0.13 g/l, and in example E10 1.4 liter per thousand (1.4 gpt = 52.5 ml) were added resulting in a polymer concentration of ∼ 0.19 g/l.

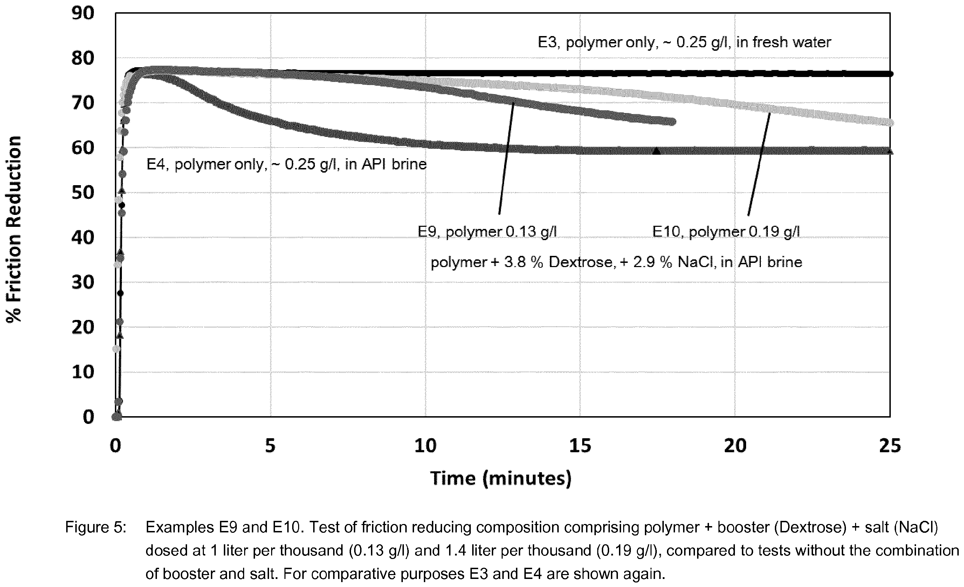

The results are shown in figure 5. For comparison, figure 5 also depicts again comparative examples E3 and E4 (i.e. tests with water-in-oil emulsion (A) and an activator (D), however no booster and no salt). Within the initial 10 min (which is the time period necessary for pumping a slick water fracturing fluid into the formation), the friction reduction formulation comprising salt and booster yields a friction reduction effect which is comparable to that fresh water, although the polymer concentration has been lowered. So, the combination of salt (B) and booster (C) shows excellent results.

Test series 6:

For examples E11 to E13 a friction reducing composition was prepared as described above using the water-in-oil-emulsion (A) comprising salts (B), a booster (C) and an activator (D). The amounts and kinds of additives besides the water-in-oil-emulsion are summarized in the following table. These were each tested in API brine at 1 liter per thousand (1 gpt) and had 13.4 % by weight active polymer, which resulted in a polymer concentration of 0.13 g/l in the flow loop

|  | salt | booster | Acticator |
|---|---|---|---|
| Example E11 | 2.9 wt. % NaCl | 5 wt. % Karo syrup | Activator 1, 3 wt. % |
| Example E12 | 9.5 wt. % NaCl | 5 wt. % Karo syrup | Activator 1, 3 wt. % |
| Example E13 | 2.9 wt. % NaCl | 5 wt. % Karo syrup | Activator 2, 3 wt. % |

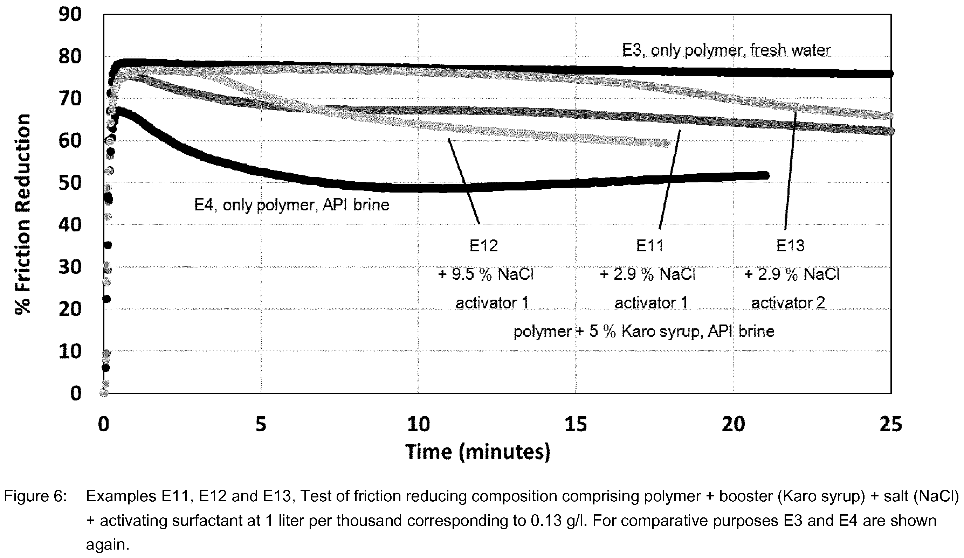

Results are shown in Figure 6. For comparison, figure 6 also depicts again comparative examples E3 and E4 (i.e. tests with water-in-oil emulsion (A) and an activator (D), however no booster and no salt)

It has been shown above (see figure 4, comparative example 8) that adding the booster Karo syrup (C) alone to the water-in-oil-emulsion (A) and activator (D) yielded results worse than without the booster. Surprisingly, adding NaCl to the water-in-oil-emulsion completely changes the situation. The friction reduction performance improves significantly. At short times (< 10 min) is equivalent or at least close to the performance of the water-in-oil-emulsion in fresh water, even though the amount of polymer added is nearly half.

Test series 7:

For example E14, a friction reducing composition was prepared as described above using the water-in-oil-emulsion (A), activator (D) at a concentration of 3 % by weight, 2.9 % by weight of NaCl and 0.05 weight % of a friction reducing booster (C) (polyvinylalcohol). This had a polymer content of 13.4 % by weight and was added to API brine at 1.4 liters per thousand (1.4 gpt), resulting in a polymer concentration of 0.19 g/l in the flow loop.

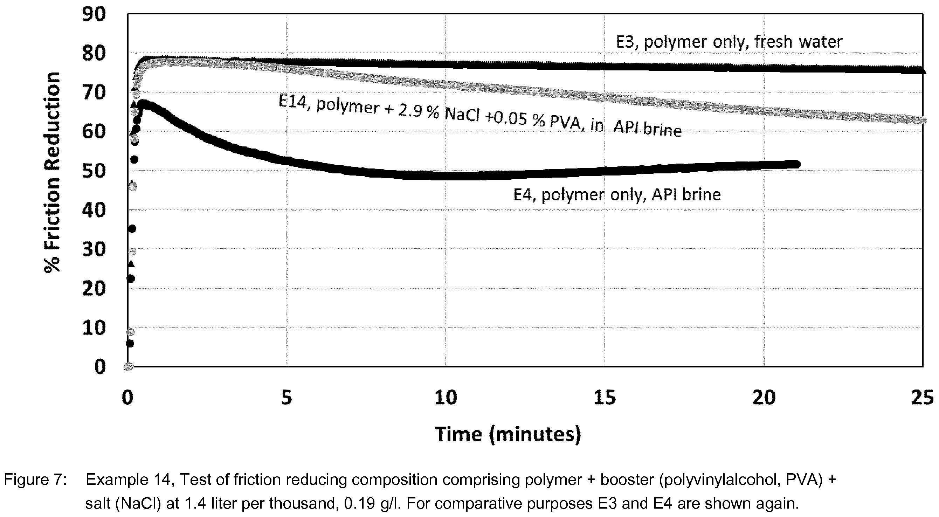

The results are shown in Fig. 7. For comparison, again comparative example E3 and E4 are depicted. Figure 7 shows that also adding the booster polyvinylalcohol significantly improves the friction reduction performance.

**Claims**

1. Method of slickwater fracturing a subterranean, oil and/or gas bearing formation penetrated by at least a wellbore comprising at least the following steps

    (1) Providing a friction reducing composition (I) comprising a copolymer comprising acrylamide,
    (2) preparing an aqueous fracturing fluid by mixing at least an aqueous base fluid, the friction reducing composition (I) and proppants, and
    (3) injecting the aqueous fracturing fluid into the at least a wellbore at a rate and pressure sufficient to penetrate into the formation, and to initiate or extend fractures in the formation and to transport proppants into thus generated fractures, and
    (4) reducing the applied pressure thereby allowing at least a portion of the injected fracturing fluid to flow back from the formation into the wellbore, wherein at least a part of the proppants injected with the fracturing fluid remains in the initiated or extended fractures generated in course of step (3), thereby holding open such fractures, and
    (5) removing such flowed back fracturing fluid from the wellbore,

    wherein the aqueous base fluid has a salinity of 30,000 ppm to 350,000 ppm and the friction reducing composition (I) comprises at least

    • a water-in-oil-emulsion (A) comprising in its aqueous phase a copolymer comprising 50 mol % to 95 mol % of acrylamide and 5 mol % to 50 mol % of at least one water-soluble, monoethylenically unsaturated, anionic or cationic comonomer, relating to the total of all monomers in the copolymer, wherein the weight average molecular weight $M_w$ of the copolymer is from 1,000,000 g/mol to 30,000,000 g/mol,

- a salt (B),
- a friction reducing booster (C), and
- an inverting surfactant (D),

wherein the amount of the copolymer in the friction reducing composition (I) is from 9 % by weight to 40 % by weight relating to the total of all components of the friction reducing composition (I), and
wherein the friction reducing composition (I) is added to the base fluid at a dosage of about 0.3 liters per thousand liters (0.3 gallons per thousand gallons, gpt) to about 5 liters per thousand (5 gpt).

2.  Method according to claim 1, wherein the monoethylenically comonomer is at least one selected from acrylic acid or salts thereof, 2-acrylamido-2-methylpropanesulfonic acid (ATBS) or salts thereof, or 2-trimethylammonioethyl acrylate chloride (DM3AQ).

3.  Method according to claim 1, wherein the monoethylenically comonomer is acrylic acid or a salt thereof.

4.  Method according to any of claims 1 to 3, wherein the total concentration of the salt(s) (B) is from 0.1 to 8 % by wt. relating to the total of all components of the friction reducing composition (I).

5.  Method according to any of claims 1 to 3, wherein the total concentration of the salt(s) (B) is from 0.1 to 2.99 % by wt. relating to relating to the total of all components of the friction reducing composition (I).

6.  Method according to any of claims 1 to 5, wherein the salt (B) comprises ions selected from the group of ammonium, potassium, sodium, fluoride, sulfate, acetate, chloride, or biphosphate, or any combination thereof.

7.  Method according to any of claims 1 to 5, wherein the salt (B) is NaCl.

8.  Method according to any of claims 1 to 7, wherein the friction reducing booster (C) is selected from the group of mono-, di-, and oligosaccharides such as dextrose, corn syrup, sorbitol, Malic acid, lactic acid, glycerol, glyoxal, glutaraldehyde, Butyl diglycol, butyl triglycol, butyl monoglycol, polyethyleneglycole, polypropyleneglykole, polypropyleneglykole monoethers, such as polypropyleneglykole monobutylether, Dimethylaminopropyl amine, polyamines, cationic polymers such as cationic polyacrylamides, alkylpolyglucosides, polyvinylalcohol, choline chloride, formic acides, their salts and/or derivatives thereof, such a potassium formate, or ionic liquids such as 1-ethyl-3-methylimidazolium chloride, 1-butyl-3-methylimidazolium chloride, methyl-tributylammonium methylsulfate or 1-butyl-3-methylimidazolium methanesulfonate.

9.  Method according to any of claims 1 to 8, wherein the friction reducing booster (C) is selected from the group of glucose, fructose, corn syrup, and polyvinylalcohols.

10. Method according to any of claims 1 to 9, wherein the friction reducing booster (C) has a molecular weight $M_n$ of less than 3000 g/mol and its amount is from 1.5 % by weight to 8 % by weight, relating to total composition of the friction reducing composition (I).

11. Method according to claim 10, wherein the amount of the friction reducing booster (C) is from 3 % by weight to 7 % by weight, relating to total composition of the friction reducing composition (I).

12. Method according to any of claims 1 to 10, wherein the friction reducing booster (C) is a polymeric booster having a number average molecular weight $M_n$ of at least 3000 g/mol, and wherein its amount is from 0.005 to 0.5 % by weight, relating to total composition of the friction reducing composition (I).

13. Method according to claim 12, wherein the amount of the polymeric friction reducing booster (C) is from 0.01 to 0.025% by weight, relating to total composition of the friction reducing composition (I).

14. Method according to any of claims 1 to 13, wherein the inverting surfactant is alcohol alkoxylate.

15. Method according to any of claims 1 to 14, wherein the aqueous base fluid comprises formation water, treated water, high salinity brine or any combination thereof.

16. Friction reducing composition (I) comprising at least

- a water-in-oil-emulsion (A) comprising in its aqueous phase a copolymer comprising 50 mol % to 95 mol % of acrylamide and 5 mol % to 50 mol % of at least one water-soluble, monoethylenically unsaturated, anionic or cationic comonomer, relating to the total of all monomers in the copolymer, wherein the weight average molecular weight $M_w$ of the copolymer is from 1,000,000 g/mol to 30,000,000 g/mol,
- a salt (B),
- a friction reducing booster (C), and
- an inverting surfactant (D),

wherein the amount of the copolymer in the friction reducing composition (I) is from 9 % by weight to 40 % by weight relating to the total of all components of the friction reducing composition (I).

17. Composition according to claim 16, wherein the monoethylenically comonomer is at least one selected from acrylic acid or salts thereof, 2-acrylamido-2-methylpropanesulfonic acid (ATBS) or salts thereof, or 2-trimethylammonioethyl acrylate chloride (DM3AQ).

18. Composition according to claim 16, wherein the monoethylenically comonomer is acrylic acid or a salt thereof.

19. Composition according to any of claims 16 to 18, wherein the total concentration of the salt(s) (B) is from 0.1 to 8 % by wt. relating to the total of all components of the friction reducing composition (I).

20. Composition according to any of claims 16 to 18, wherein the total concentration of the salt(s) (B) is from 0.1 to 2.99 % by wt. relating to relating to the total of all components of the friction reducing composition (I).

21. Composition according to any of claims 16 to 20, wherein the salt (B) comprises ions selected from the group of ammonium, potassium, sodium, fluoride, sulfate, acetate, chloride, or biphosphate, or any combination thereof.

22. Composition according to any of claims 16 to 20, wherein the salt (B) is NaCl.

23. Composition according to any of claims 16 to 22, wherein the friction reducing booster (C) is selected from the group of mono-, di-, and oligosaccharides such as dextrose, corn syrup, sorbitol, Malic acid, lactic acid, glycerol, glyoxal, glutaraldehyde, Butyl diglycol, butyl triglycol, butyl monoglycol, polyethyleneglycole, polypropyleneglykole, polypropyleneglykole monoethers, such as polypropyleneglykole monobutylether, Dimethylaminopropyl amine, polyamines, cationic polymers such as cationic polyacrylamides, alkylpolyglucosides, polyvinylalcohol, choline chloride, formic acides, their salts and/or derivatives thereof, such a potassium formate, or ionic liquids such as 1-ethyl-3-methylimidazolium chloride, 1-butyl-3-methylimidazolium chloride, methyl-tributylammonium methylsulfate or 1-butyl-3-methylimidazolium methanesulfonate.

24. Composition according to any of claims 16 to 22, wherein the friction reducing booster (C) is selected from the group of glucose, fructose, corn syrup, and polyvinylalcohols.

25. Composition according to any of claims 16 to 22, wherein the friction reducing booster (C) has a molecular weight $M_n$ of less than 3000 g/mol and its amount is from 1.5 % by weight to 8 % by weight, relating to total composition of the friction reducing composition (I).

26. Composition according to claim 25, wherein the amount of the friction reducing booster (C) is from 3 % by weight to 7 % by weight, relating to total composition of the friction reducing composition (I).

27. Composition according to any of claims 16 to 22, wherein the friction reducing booster (C) is a polymeric booster having a number average molecular weight $M_n$ of at least 3000 g/mol, and wherein its amount is from 0.005 to 0.5 % by weight, relating to total composition of the friction reducing composition (I).

28. Composition according to claim 27, wherein the amount of the polymeric friction reducing booster (C) is from 0.01 to 0.025% by weight, relating to total composition of the friction reducing composition (I).

29. Composition according to any of claims 16 to 28, wherein the inverting surfactant is alcohol alkoxylate.

30. Method of slickwater fracturing a subterranean, oil and/or gas bearing formation penetrated by at least a wellbore comprising at least the following steps

(1) Providing a friction reducing composition (II) comprising a copolymer comprising acrylamide,

(2) preparing an aqueous fracturing fluid by mixing at least an aqueous base fluid, the friction reducing composition (II) and proppants, and

(3) injecting the aqueous fracturing fluid into the at least a wellbore at a rate and pressure sufficient to penetrate into the formation, and to initiate or extend fractures in the formation and to transport proppants into thus generated fractures, and

(4) reducing the applied pressure thereby allowing at least a portion of the injected fracturing fluid to flow back from the formation into the wellbore, wherein at least a part of the proppants injected with the fracturing fluid remains in the initiated or extended fractures generated in course of step (3), thereby holding open such fractures, and

(5) removing such flowed back fracturing fluid from the wellbore,

wherein the aqueous base fluid has a salinity of 30,000 ppm to 350,000 ppm and the friction reducing composition (II) comprises at least

• a water-in-oil-emulsion (A) comprising in its aqueous phase a copolymer comprising 50 mol % to 95 mol % of acrylamide and 5 mol % to 50 mol % at least one water-soluble, monoethylenically unsaturated, anionic or cationic comonomer, relating to the total of all monomers in the copolymer, wherein the weight average molecular weight $M_w$ of the copolymer is from 1,000,000 g/mol to 30,000,000 g/mol,

• a salt (B),

• an inverting surfactant (D),

wherein the amount of the copolymer in the friction reducing composition (II) is from 9 % by weight to 40 % by weight, relating to the total of all components of the friction reducing composition (II), and

wherein the amount of the salt (B) is from 0.1 % by weight to 2.99 % by weight, relating to the total of all components of the friction reducing composition (II), and

wherein the friction reducing composition (II) is added to the base fluid at a dosage of about 0.3 liters per thousand liters (0.3 gallons per thousand gallons, gpt) to about 5 liters per thousand (5 gpt).

31. Method according to claim 30, wherein the monoethylenically unsaturated comonomer is at least one selected from acrylic acid or salts thereof, ATBS or salts thereof, or DM3AQ.

32. Method according to claim 30, wherein the monoethylenically unsaturated comonomer is acrylic acid or a salt thereof.

33. Friction reducing composition (II) comprising at least

• a water-in-oil-emulsion (A) comprising in its aqueous phase a copolymer comprising 50 mol % to 95 mol % of acrylamide and 5 mol % to 50 mol % at least one water-soluble, monoethylenically unsaturated, anionic or cationic comonomer, relating to the total of all monomers in the copolymer, wherein the weight average molecular weight $M_w$ of the copolymer is from 1,000,000 g/mol to 30,000,000 g/mol

• a salt (B),

• an inverting surfactant (D),

wherein the amount of the copolymer in the friction reducing composition (II) is from 9 % by weight to 40 % by weight, and

the amount of the salt (B) is from 0.1 % by weight to 2.99 % by weight, relating to the total of all components of the friction reducing composition (II).

34. Friction reduction composition according to claim 33, wherein the monoethylenically unsaturated comonomer is at least one selected from acrylic acid or salts thereof, ATBS or salts thereof, or DM3AQ.

35. Friction reduction composition according to claim 33, wherein the monoethylenically unsaturated comonomer is acrylic acid or a salt thereof.

Figure 1: Comparative examples E1 and E2: Friction reducing composition with no salt or booster added at 0.5 liters per thousand (0.5 gpt) to fresh water and to API brine ( ~ 0.12 g/l of polymer concentration).

Figure 2: Comparative examples E3 to E5, Friction reducing composition comprising only polymer (at the concentration as indicated above) in fresh water and in brine

17

Figure 3: Comparative example E2 (no salt), comparative example E7 (9.5 % salt) and example E6 (2.9 % salt) in API brine. Samples with NaCl were dosed at 1 liter per thousand (1 gpt) corresponding to 0.13 g/l in the flow loop. The sample with no salt was dosed at 0.5 liter per thousand (0.5 gpt) providing 0.12 g/l polymer in the test loop.

Figure 4: Comparative example E8, E3, and E4. Test of friction reducing composition comprising polymer (at the concentration indicated above) and booster (5% Karo syrup) in API brine, compared to tests without booster. All tests at 1 liter per thousand (1 gpt) with concentrations as indicated.

EP 3 556 823 A1

Figure 5:   Examples E9 and E10. Test of friction reducing composition comprising polymer + booster (Dextrose) + salt (NaCl) dosed at 1 liter per thousand (0.13 g/l) and 1.4 liter per thousand (0.19 g/l), compared to tests without the combination of booster and salt. For comparative purposes E3 and E4 are shown again.

Figure 6: Examples E11, E12 and E13, Test of friction reducing composition comprising polymer + booster (Karo syrup) + salt (NaCl) + activating surfactant at 1 liter per thousand corresponding to 0.13 g/l. For comparative purposes E3 and E4 are shown again.

Figure 7: Example 14, Test of friction reducing composition comprising polymer + booster (polyvinylalcohol, PVA) + salt (NaCl) at 1.4 liter per thousand, 0.19 g/l. For comparative purposes E3 and E4 are shown again.

EP 3 556 823 A1

Europäisches
Patentamt

European
Patent Office

Office européen
des brevets

# EUROPEAN SEARCH REPORT

**Application Number**

EP 18 16 8141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2016/109333 A1 (WATERMAN PAUL [US]; JACKSON LOGAN [US]; NGUYEN DANNY [US]; ROBINSON RO) 7 July 2016 (2016-07-07) * page 3, paragraph [0012] through page 4, paragraph [0018], page 5, paragraph [0020] through page 9, paragraph [0034], page 11, paragraph [0046] through page 14, paragraph [0063], page 22, paragraph [00100] through page 23, paragraph [00107], Examples, claims * | 1-15 | INV. C09K8/68 |
| A | US 2012/245061 A1 (KAKADJIAN SARKIS R [US] ET AL) 27 September 2012 (2012-09-27) * the whole document * | 1-15 | |
| A | WO 2018/045282 A1 (KEMIRA OYJ [FI]; TELLAKULA ROOPA [US]) 8 March 2018 (2018-03-08) * the whole document * | 1-15 | |
| A | WO 2016/109348 A1 (JACKSON LOGAN [US]; LUO YUPING [US]; ROBINSON RONALD [US]; NGUYEN DANN) 7 July 2016 (2016-07-07) * the whole document * | 1-15 | TECHNICAL FIELDS SEARCHED (IPC) C09K |
| A | WO 2016/137945 A2 (SOLVAY USA INC [US]) 1 September 2016 (2016-09-01) * the whole document * | 1-15 | |

The present search report has been drawn up for all claims

| Place of search | Date of completion of the search | Examiner |
|---|---|---|
| Munich | 25 January 2019 | Nemes, Csaba A. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 18 16 8141

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☒ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**EP 3 556 823 A1**

## ANNEX TO THE EUROPEAN SEARCH REPORT
## ON EUROPEAN PATENT APPLICATION NO.

EP 18 16 8141

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2019

| Patent document cited in search report | | | Publication date | Patent family member(s) | | Publication date |
|---|---|---|---|---|---|---|
| WO 2016109333 | A1 | | 07-07-2016 | AR | 103325 A1 | 03-05-2017 |
| | | | | AU | 2015374408 A1 | 13-07-2017 |
| | | | | CA | 2972424 A1 | 07-07-2016 |
| | | | | CN | 107250319 A | 13-10-2017 |
| | | | | GB | 2549898 A | 01-11-2017 |
| | | | | US | 2017362487 A1 | 21-12-2017 |
| | | | | WO | 2016109333 A1 | 07-07-2016 |
| US 2012245061 | A1 | | 27-09-2012 | NONE | | |
| WO 2018045282 | A1 | | 08-03-2018 | NONE | | |
| WO 2016109348 | A1 | | 07-07-2016 | AR | 103324 A1 | 03-05-2017 |
| | | | | AU | 2015374328 A1 | 13-07-2017 |
| | | | | CA | 2972431 A1 | 07-07-2016 |
| | | | | CN | 107207953 A | 26-09-2017 |
| | | | | EP | 3240854 A1 | 08-11-2017 |
| | | | | US | 2017362489 A1 | 21-12-2017 |
| | | | | WO | 2016109348 A1 | 07-07-2016 |
| WO 2016137945 | A2 | | 01-09-2016 | AU | 2016222978 A1 | 24-08-2017 |
| | | | | CA | 2977371 A1 | 01-09-2016 |
| | | | | CN | 107278223 A | 20-10-2017 |
| | | | | EP | 3262136 A2 | 03-01-2018 |
| | | | | US | 2016251567 A1 | 01-09-2016 |
| | | | | WO | 2016137945 A2 | 01-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5067508 A
- US 20030191030 A1
- WO 204028804 A1
- WO 2016011106 A1
- WO 2016109333 A1
- CA 2864159 A1
- US 8841240 B2
- US 9315722 B1
- US 20150240144 A1
- US 20170121590 A1
- WO 2017143136 A1